# EUROPEAN PATENT APPLICATION

(11) **EP 3 223 131 A1**
(43) Date of publication of application: **27.09.2017**
(21) Application number: 17162000.8
(22) Date of filing: 21.03.2017
(51) Int. Cl.: G06F 3/0488, G06F 1/32, G06F 21/32, G06F 3/0354

(54) **ELECTRONIC DEVICE WITH FINGERPRINT SENSOR AND CONTROL METHOD THEREOF**

(30) Priority: 21.03.2016 KR 20160033496 P
(71) Applicant: Samsung Electronics Co., Ltd., Gyeonggi-do 16677 (KR)
(72) Inventor: KANG, Seunggoo, 16677 Gyeonggi-do, (KR)
(74) Representative: HGF Limited

(57) **Abstract**

Disclosed is an electronic device for detecting an input through a touch sensor and a finger scan sensor. The electronic device includes a sensor module that has a first sensor configured to recognize a touch, and a second sensor configured to recognize a fingerprint, and a processor electrically connected to the sensor module. The processor may activate the first sensor, activate the second sensor in response to a first input received through the first sensor, and perform a function corresponding to a second input in response to the second input received through the second sensor.

## Description

### BACKGROUND

### 1. Field of the Disclosure

The present disclosure relates generally to an electronic device, and more particularly, to an electronic device capable of detecting an input through a touch sensor and a finger scan sensor and to a method for controlling the electronic device.

### 2. Description of the Related Art

There has been a recent growth in the popularity of electronic devices, such as smart phones, tablet PCs (personal computers), desktop PCs, PMPs (portable multimedia players), MP3 (motion pictures experts group (MPEG) layer audio 3) players, and wearable devices. This electronic device allows a user to access various types of digital or multimedia contents.

Electronic devices provide touch-based input units, such as a touch pad, as well as physical keys or buttons, and some electronic devices utilize user's biometric information, such as fingerprints, as input means for enhancing security. For example, fingerprint recognition technology of such electronic devices is used to prevent security accidents in connection with user registration and authentication.

Recent attempts have been made to provide a new user interface using a finger scan sensor in various electronic devices. This configuration enables a user to utilize various input mechanisms such as a touch-based input and fingerprint recognition at a single electronic device, thus enabling more convenient use of various functions of the electronic device.

However, input units such a touch sensor and a finger scan sensor need to always be activated for recognizing a touch or fingerprint input, which causes an increase in power consumption of the electronic device.

As such, there is a need in the art for an electronic device and control method which prevent excessive power consumption when implementing the touch and finger scan sensors.

### SUMMARY

Accordingly, the present disclosure is made to address at least the disadvantages described above and to provide at least the advantages described below.

An aspect of the present disclosure is to provide an electronic device and method for adaptively controlling power supply timing as to a finger scan sensor in order to reduce power consumption.

According to an aspect of the present disclosure, an electronic device includes a sensor module including a first sensor configured to recognize a touch of a user and a second sensor configured to recognize a fingerprint of the user; and a processor electrically connected to the sensor module, wherein the processor is configured to activate the first sensor, activate the second sensor in response to a first input received through the first sensor, and perform a function corresponding to a second input in response to the second input being received through the second sensor.

According to another aspect of the present disclosure, a method for controlling an electronic device including a first sensor for recognizing a touch of a user and a second sensor for recognizing a fingerprint of the user, includes activating the first sensor, activating the second sensor in response to a first input received through the first sensor, and performing a function corresponding to a second input in response to the second input being received through the second sensor.

According to another aspect of the present disclosure, a non-transitory computer-readable recording medium is disclosed, having, recorded thereon, a program for executing a method for controlling an electronic device including a first sensor for recognizing a touch of a user and a second sensor for recognizing a fingerprint of the user, wherein the method includes activating the first sensor, activating the second sensor in response to a first input received through the first sensor, and performing a function corresponding to a second input in response to the second input being received through the second sensor.

### BRIEF DESCRIPTION OF THE DRAWINGS

FIG. 1 illustrates a network environment including an electronic device according to embodiments of the present disclosure;
FIG. 2 illustrates an electronic device according to embodiments of the present disclosure;
FIG. 3 illustrates a program module according to embodiments of the present disclosure;
FIG. 4 illustrates an electronic device according to embodiments of the present disclosure;
FIG. 5 illustrates the front face of an electronic device according to embodiments of the present disclosure;
FIG. 6 illustrates the structure of a finger scan sensor of an electronic device according to embodiments of the present disclosure;
FIG. 7 illustrates a method for performing a function through first and second sensors at an electronic device according to embodiments of the present disclosure;
FIGs. 8A and 8B illustrate a method for performing a function through first and second sensors at an electronic device according to embodiments of the present disclosure;
FIG. 9 is a timing diagram illustrating different second inputs entered through a second sensor at an electronic device according to embodiments of the present disclosure;
FIGs. 10A, 10B and 10C illustrate performing different functions in response to second inputs entered through a second sensor at an electronic device according to embodiments of the present disclosure;
FIG. 11 illustrates a method for performing a function through first and second sensors, when a security application is running, at an electronic device according to embodiments of the present disclosure;
FIGs. 12A, 12B and 12C illustrate a method for performing different functions when a security application is running at an electronic device according to embodiments of the present disclosure;
FIGs. 13A, 13B and 13C illustrate performing predefined functions through first and second sensors when there is no physical key on the front face of an electronic device according to embodiments of the present disclosure;
FIGs. 14A and 14B illustrate the state when a first sensor is disposed near a physical key of an electronic device according to embodiments of the present disclosure; and
FIGS. 15A, 15B and 15C illustrate the state when a touch panel for a first sensor is separately disposed around a physical key of an electronic device according to embodiments of the present disclosure.

### DETAILED DESCRIPTION

Hereinafter, embodiments of the present disclosure are described in detail with reference to the accompanying drawings. While the present disclosure may be embodied in many different forms, specific embodiments of the present disclosure are shown in drawings and are described herein in detail, with the understanding that the present disclosure is to be considered to be limited thereto. The same reference numerals are used throughout the drawings to refer to the same or like parts.

An expression "comprising" or "may comprise" used in the present disclosure indicates presence of a corresponding function, operation, or element and does not limit an additional at least one function, operation, or element. The term "comprise" or "have" used herein indicates presence of a characteristic, numeral, step, operation, element, component, or combination thereof described in the Sspecification and does not exclude presence or addition of at least one other characteristic, numeral, step, operation, element, component, or combination thereof.

In the present disclosure, the term "or" includes any combination or the entire combination of together listed words. For example, "A or B" may include A, B, or A and B.

Expressions such as "a first" and "a second" in the present disclosure may represent various elements of the present disclosure, but do not limit corresponding elements, e.g., do not limit order and/or importance of corresponding elements, but may be used for distinguishing one element from another element. For example, both a first user device and a second user device are user devices and represent different user devices. For example, a first constituent element may be referred to as a second constituent element without deviating from the scope of the present disclosure, and similarly, a second constituent element may be referred to as a first constituent element.

When it is described that a first element is "coupled" to another element, such as a second element, the first element may be "directly coupled" to the second element or "electrically coupled" to the second element through a third element. However, when it is described that a first element is "directly coupled" to a second element, no third element may exist between the first and second elements.

Terms used in the present disclosure are not intended to limit the present disclosure but to illustrate embodiments of the present disclosure. When using in a description of the present disclosure and the appended claims, a singular form includes a plurality of forms unless it is explicitly differently represented.

Unless differently defined, terms including a technical term and a scientific term used herein have the same meaning as may be generally understood by a person of common skill in the art. It should be understood that generally using terms defined in a dictionary have a meaning corresponding to that of a context of related technology and are not understood to have an ideal or excessively formal meaning unless explicitly defined.

In this disclosure, an electronic device may have a communication function. For example, an electronic device may be a smart phone, a tablet PC, a mobile phone, a video phone, an e-book reader, a desktop PC, a laptop PC, a netbook computer, a PDA (personal digital assistant), a PMP (portable multimedia player), an MP3 player, a portable medical device, a digital camera, or a wearable device, such as an HMD (head-mounted device) in the form of electronic glasses, electronic clothes, an electronic bracelet, an electronic necklace, an electronic appcessory, or a smart watch.

According to some embodiments, an electronic device may be a smart home appliance that involves a communication function, such as a TV (television), a DVD (digital video disk) player, audio equipment, a refrigerator, an air conditioner, a vacuum cleaner, an oven, a microwave, a washing machine, an air cleaner, a set-top box, a TV box, such as Samsung HomeSync^{™}, Apple TV^{™}, and Google TV^{™}, a game console, an electronic dictionary, an electronic key, a camcorder, or an electronic picture frame.

According to some embodiments, an electronic device may be a medical device, such as MRA (magnetic resonance angiography), MRI (magnetic resonance imaging), CT (computed tomography), and ultrasonography, a navigation device, a GPS (global positioning system) receiver, an EDR (event data recorder), an FDR (flight data recorder), a car infotainment device, electronic equipment for ship, such as a marine navigation system or a gyrocompass), avionics, security equipment, or an industrial or home robot.

According to some embodiments, an electronic device may be furniture or part of a building or construction having a communication function, an electronic board, an electronic signature receiving device, a projector, or various measuring instruments, such as a water, electric, gas, or a wave meter. An electronic device disclosed herein may be one of the above-mentioned devices or any combination thereof. As well understood by those skilled in the art, the above-mentioned electronic devices are not to be considered as a limitation of the present disclosure.

According to embodiments, the electronic device may control the activation of a second sensor, based on a signal received through a first sensor, which reduces power consumption of the electronic device compared to a conventional device, in which the second sensor is always activated. The electronic device according to embodiments of the present disclosure may perform a predefined function in response to the signal received through the second sensor.

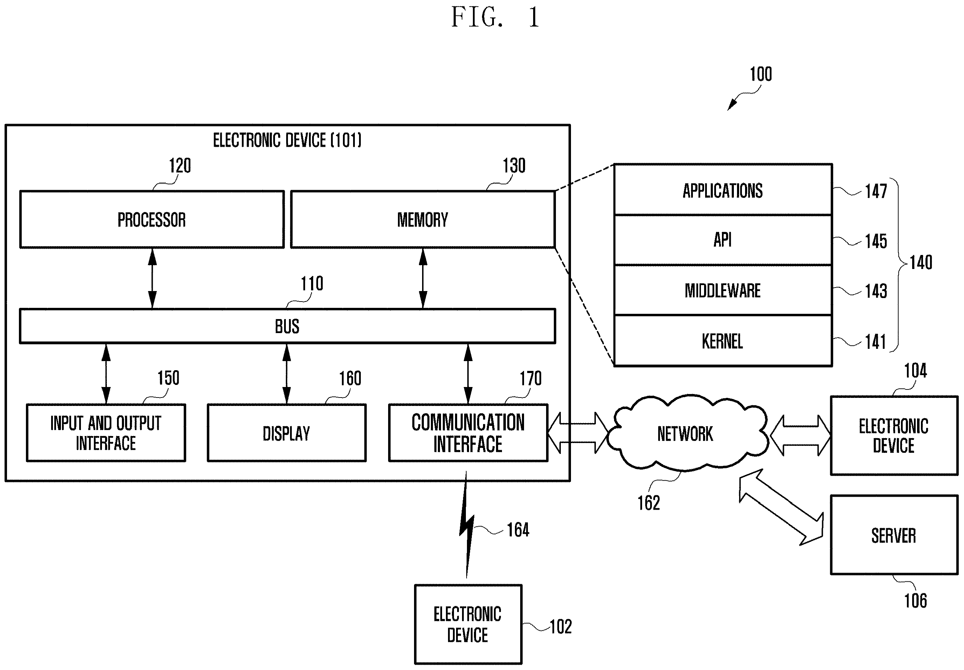

FIG. 1 is a block diagram 100 illustrating an electronic device according to an embodiment of the present disclosure.

Referring to FIG. 1, the electronic device 101 may include a bus 110, a processor 120, a memory 130, a user input module (i.e., input/output interface) 150, a display 160, and a communication interface 170.

The bus 110 may be a circuit for interconnecting elements of the electronic device 101 and for allowing a communication, such as by transferring a control message, between the elements.

The processor 120 can receive commands from the memory 130, the user input module 150, the display 160, and the communication interface 170, through the bus 110, can decipher the received commands, and perform operations and/or data processing according to the deciphered commands.

The memory 130 can store commands received from the processor 120 and/or other elements, and/or commands and/or data generated by the processor 120 and/or other elements. The memory 130 may include software and/or programs 140, such as a kernel 141, middleware 143, an application programming interface (API) 145, and an applications 147. Each of the programming modules described above may be configured by software, firmware, hardware, and/or combinations of at least two thereof.

The kernel 141 can control and/or manage system resources used for execution of operations and/or functions implemented in other programming modules, such as the middleware 143, the API 145, and/or the applications 147, and can provide an interface through which the middleware 143, the API 145, and/or the applications 147 can access and then control and/or manage an individual element of the electronic device 101.

The middleware 143 can perform a relay function which allows the API 145 and/or the applications 147 to communicate with and exchange data with the kernel 141. In relation to operation requests received from at least one of applications 147, the middleware 143 can perform load balancing in relation to the operation requests by giving a priority in using a system resource, e.g. the bus 110, the processor 120, and/or the memory 130, of the electronic device 101 to at least one application from among the applications 147.

The API 145 is an interface through which the applications 147 can control a function provided by the kernel 141 and/or the middleware 143, and may include at least one interface or function for file control, window control, image processing, and/or character control.

The user input module 150 can receive a command and/or data from a user, and transfer the received command and/or data to the processor 120 and/or the memory 130 through the bus 110. The display 160 can display an image, a video, and/or data to a user.

The communication interface 170 can establish a communication 164 between the electronic device 101 and another electronic devices 102 and 104 and/or a server 106, and can support short range communication protocols, e.g. a wireless fidelity (WiFi) protocol, a BlueTooth (BT) protocol, and a near field communication (NFC) protocol, through communication networks, e.g. Internet, local area network (LAN), wide area network (WAN), a telecommunication network, a cellular network, and a satellite network, a plain old telephone service (POTS), or any other similar and/or suitable communication networks, such as network 162. Each of the electronic devices 102 and 104 may be the same type or different types of electronic devices.

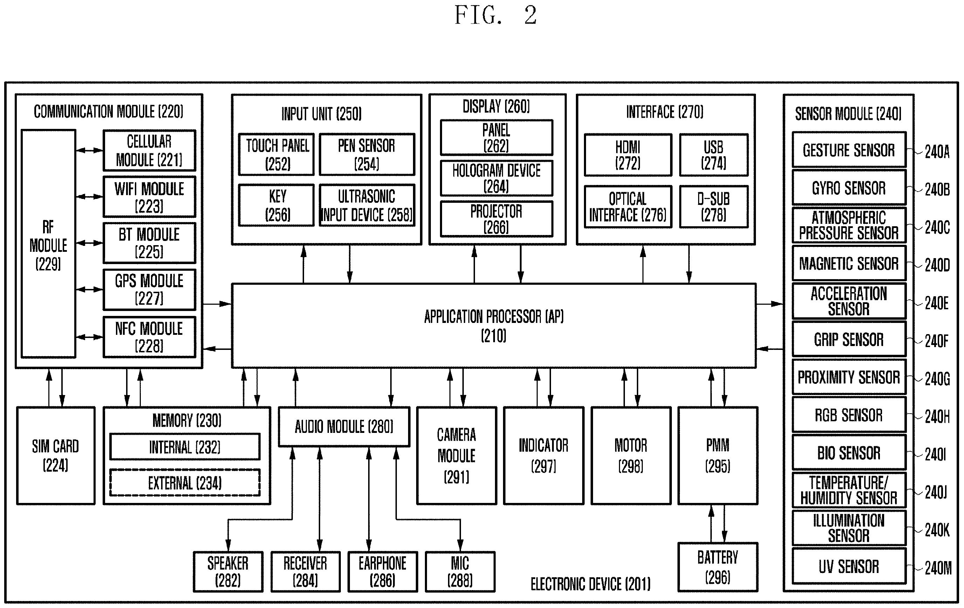

FIG. 2 illustrates an electronic device 201 in accordance with an embodiment of the present disclosure. The electronic device 201 may form all or part of the electronic device 101 shown in FIG. 1.

Referring to FIG. 2, the electronic device 201 may include at least one application processor (AP) 210, a communication module 220, a subscriber identification module (SIM) card 224, a memory 230, a sensor module 240, an input unit 250, a display 260, an interface 270, an audio module 280, a camera module 291, a power management module (PMM) 295, a battery 296, an indicator 297, and a motor 298.

The AP 210 may drive an operating system or applications, control a plurality of hardware or software components connected thereto, and also perform processing and operation for various data including multimedia data. The AP 210 may be formed of a system-on-chip (SoC), and may further include a graphic processing unit (GPU).

The communication module 220 may perform a data communication with any other electronic device connected to the electronic device 201 through the network. According to an embodiment, the communication module 220 may include therein a cellular module 221, a WiFi module 223, a BT module 225, a GPS module 227, an NFC module 228, and an RF (radio frequency) module 229.

The cellular module 221 may offer a voice call, a video call, a message service, or an Internet service through a communication network, such as long term evolution (LTE), LTE-advanced (LTE-A), code division multiple access (CDMA), wideband CDMA (WCDMA), universal mobile telecommunications system (UMTS), WiBro, or global system for mobile communication (GSM). Additionally, the cellular module 221 may perform identification and authentication of the electronic device in the communication network, using the SIM card 224. According to an embodiment, the cellular module 221 may perform at least part of functions the AP 210 can provide, such as a multimedia control function.

According to an embodiment, the cellular module 221 may include a communication processor (CP), and may be formed of an SoC, for example. Although some elements such as the cellular module 221, such as the CP, the memory 230, or the power management module 295 are shown as separate elements being different from the AP 210 in FIG. 2, the AP 210 may be formed to have at least part of the above elements in an embodiment of the present disclosure.

According to an embodiment, the AP 210 or the cellular module 221 may load commands or data, received from a nonvolatile memory connected thereto or from at least one of the other elements, into a volatile memory to process them. Additionally, the AP 210 or the cellular module 221 may store data, received from or created at one or more of the other elements, in the nonvolatile memory.

Each of the WiFi module 223, the BT module 225, the GPS module 227 and the NFC module 228 may include a processor for processing data transmitted or received therethrough. Although FIG. 2 illustrates the cellular module 221, the WiFi module 223, the BT module 225, the GPS module 227 and the NFC module 228 as different blocks, at least two of these modules may be contained in a single IC (integrated circuit) chip or a single IC package, i.e., may be formed as a single SoC.

The RF module 229 may transmit and receive RF signals or any other electric signals, and may include a transceiver, a PAM (power amp module), a frequency filter, or an LNA (low noise amplifier). The RF module 229 may further include any component, e.g., a wire or a conductor, for transmission of electromagnetic waves in a free air space. Although FIG. 2 illustrates that the cellular module 221, the WiFi module 223, the BT module 225, the GPS module 227 and the NFC module 228 share the RF module 229, at least one of these modules may perform transmission and reception of RF signals through a separate RF module in an embodiment of the present disclosure.

The SIM card 224 may be a specific card formed of SIM and may be inserted into a slot formed at a certain location of the electronic device. The SIM card 224 may contain therein an ICCID (integrated circuit card identifier) or an IMSI (international mobile subscriber identity).

The memory 230 may include an internal memory 232 and an external memory 234. The internal memory 232 may include at least one of a volatile memory, such as DRAM (dynamic random access memory), SRAM (static RAM), SDRAM (synchronous DRAM), or a nonvolatile memory, such as OTPROM (one time programmable read-only memory), PROM (programmable ROM), EPROM (erasable and programmable ROM), EEPROM (electrically erasable and programmable ROM), mask ROM, flash ROM, NAND flash memory, and NOR flash memory.

According to an embodiment, the internal memory 232 may have the form of an SSD (solid state drive). The external memory 234 may include a flash drive, e.g., CF (compact flash), SD (secure digital), Micro-SD (micro secure digital), Mini-SD (mini secure digital), xD (extreme digital), or memory stick, and may be functionally connected to the electronic device 201 through various interfaces. The electronic device 201 may further include a storage device or medium such as a hard drive.

The sensor module 240 may measure physical quantity or sense an operating status of the electronic device 201, and then convert measured or sensed information into electric signals. The sensor module 240 may include at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H, such as an RGB (red, green, blue) sensor, a biometric sensor 2401, a temperature-humidity sensor 240J, an illumination sensor 240K, and a UV (ultraviolet) sensor 240M. Additionally or alternatively, the sensor module 240 may include an E-nose sensor, an EMG (electromyography) sensor, an EEG (electroencephalogram) sensor, an ECG (electrocardiogram) sensor, an IR (infrared) sensor, an iris scan sensor, or a finger scan sensor. The sensor module 240 may include a control circuit for controlling one or more sensors equipped therein.

The input unit 250 may include a touch panel 252, a digital pen sensor 254, a key 256, or an ultrasonic input device 258. The touch panel 252 may recognize a touch input in a capacitive, resistive, infrared, or ultrasonic type manner. The touch panel 252 may further include a control circuit. In case of a capacitive type, a physical contact or proximity may be recognized. The touch panel 252 may further include a tactile layer that offers a tactile feedback to a user.

The digital pen sensor 254 may be formed in the same or similar manner as receiving a touch input or by using a separate recognition sheet. The key 256 may include a physical button, an optical key, or a keypad. The ultrasonic input device 258 is capable of identifying data by sensing sound waves with a microphone (MIC) 288 in the electronic device 201 through an input tool that generates ultrasonic signals, thus allowing wireless recognition. According to an embodiment, the electronic device 201 may receive a user input from any external device connected thereto through the communication module 220.

The display 260 may include a panel 262, a hologram device 264, or a projector 266. The panel 262 may be LCD (liquid crystal display), or AM-OLED (active matrix organic light emitting diode)may have a flexible, transparent or wearable form, and may be formed of a single module with the touch panel 252. The hologram device 264 may project a stereoscopic image in the air using interference of light. The projector 266 may project an image onto a screen, which may be located at the inside or outside of the electronic device 201. According to an embodiment, the display 260 may further include a control circuit for controlling the panel 262, the hologram device 264, and the projector 266.

The interface 270 may include an HDMI (high-definition multimedia interface) 272, a USB (universal serial bus) 274, an optical interface 276, and a D-sub (d-subminiature) 278, and may be contained in the communication interface 160 shown in FIG. 1. Additionally or alternatively, the interface 270 may include an MHL (mobile high-definition link) interface, an SD (secure digital) card/MMC (multi-media card) interface, or an IrDA (infrared data association) interface.

The audio module 280 may perform a conversion between sounds and electric signals. At least part of the audio module 280 may be contained in the input/output interface 140 shown in FIG. 1. The audio module 280 may process sound information inputted or outputted through a speaker 282, a receiver 284, an earphone 286, or the MIC 288.

The camera module 291 is capable of obtaining still images and moving images, and may include at least one image sensor, such as a front sensor or a rear sensor, a lens, an ISP (image signal processor,, or a flash, such as LED or xenon lamp.

The power management module 295 may manage electric power of the electronic device 201 and may include a PMIC (power management integrated circuit), a charger IC, or a battery gauge.

The PMIC may be formed of an IC chip or SoC. Charging may be performed in a wired or wireless manner. The charger IC may charge a battery 296 and prevent overvoltage or overcurrent from a charger. According to an embodiment, the charger IC may have a charger IC used for at least one of wired and wireless charging types. A wireless charging type may include a magnetic resonance type, a magnetic induction type, or an electromagnetic type. Any additional circuit for a wireless charging may be further used, such as a coil loop, a resonance circuit, or a rectifier.

The battery gauge may measure the residual amount of the battery 296 and a voltage, current or temperature in a charging process. The battery 296 may store or create electric power therein and supply electric power to the electronic device 201. The battery 296 may be a rechargeable or solar battery.

The indicator 297 may illustrate thereon a current status, such as a booting, message, or recharging status of part or all of the electronic device 201. The motor 298 may convert an electric signal into a mechanical vibration. The electronic device 201 may include a specific processor, such as GPU, for supporting a mobile TV. This processor may process media data that comply with standards of DMB (digital multimedia broadcasting), DVB (digital video broadcasting), or media flow.

Each of the above-discussed elements of the electronic device disclosed herein may be formed of one or more components, and may have various names according to the type of the electronic device. The electronic device disclosed herein may be formed of at least one of the above-discussed elements without some elements or with additional elements. Some of the elements may be integrated into a single entity that still performs the same functions as those of such elements before integrated.

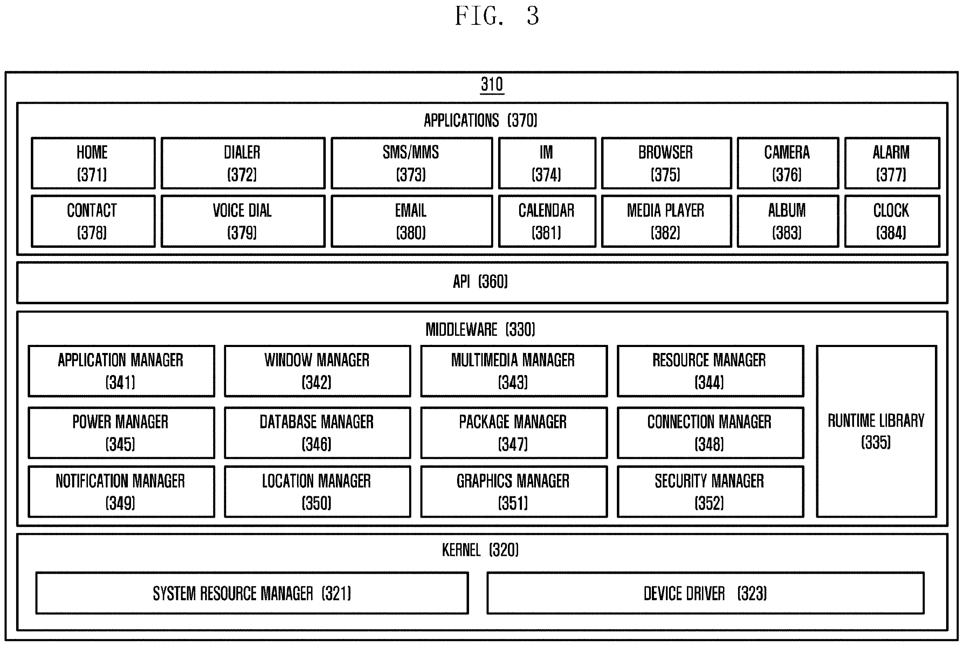

FIG. 3 illustrates a configuration of a programming module 310 according to an embodiment of the present disclosure.

The programming module 310 may be stored in the electronic device 101 or may be stored in the electronic device 201 illustrated in FIG. 2. At least a part of the programming module 310 may be implemented in software, firmware, hardware, or a combination of two or more thereof. The programming module 310 may be implemented in electronic device 201, and may include an operation system (OS) controlling resources related to an electronic device and/or various applications 370 executed in the OS. For example, the OS may be Android, iOS, Windows, Symbian, Tizen, or Bada.

Referring to FIG. 3, the programming module 310 may include a kernel 320, middleware 330, an API 360, and/or applications 370.

The kernel 320 may include a system resource manager 321 and/or a device driver 323. The system resource manager 321 may include a process manager, a memory manager, and a file system manager. The system resource manager 321 may perform the control, allocation, or recovery of system resources. The device driver 323 may include a display driver, a camera driver, a Bluetooth driver, a shared memory driver, a USB driver, a keypad driver, a Wi-Fi driver, and/or an audio driver, andmay further include an inter-process communication (IPC) driver.

The middleware 330 may include multiple modules previously implemented so as to provide a function used in common by the applications 370, and may provide a function to the applications 370 through the API 360 in order to enable the applications 370 to efficiently use limited system resources within the electronic device. For example, as illustrated in FIG. 3, the middleware 330 may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphics manager 351, a security manager 352, and any other suitable and/or similar manager.

The runtime library 335 may include a library module used by a complier, in order to add a new function by using a programming language during the execution of the applications 370, and may perform functions which are related to input and output, the management of a memory, or an arithmetic function.

The application manager 341 may manage a life cycle of at least one of the applications 370. The window manager 342 may manage GUI resources used on the screen. The multimedia manager 343 may detect a format used to reproduce various media files and may encode or decode a media file through a codec appropriate for the relevant format. The resource manager 344 may manage resources, such as a source code, a memory, or a storage space, of at least one of the applications 370.

The power manager 345 may operate together with a basic input/output system (BIOS), may manage a battery or power, and may provide power information used for an operation. The database manager 346 may manage a database in such a manner as to enable the generation, search and/or change of the database to be used by at least one of the applications 370. The package manager 347 may manage the installation and/or update of an application distributed in the form of a package file.

The connectivity manager 348 may manage a wireless connectivity such as Wi-Fi and Bluetooth. The notification manager 349 may display or report, to the user, an event such as an arrival message, an appointment, or a proximity alarm, in such a manner as not to disturb the user. The location manager 350 may manage location information of the electronic device. The graphics manager 351 may manage graphic effects, which are to be provided to the user, and/or a user interface related to the graphic effects. The security manager 352 may provide various security functions used for system security and user authentication. According to an embodiment of the present disclosure, when the electronic device has a telephone function, the middleware 330 may further include a telephony manager for managing a voice and/or video telephony call function of the electronic device.

The middleware 330 may generate and use new middleware module through various functional combinations of the above-described internal element modules, may provide modules specialized according to types of OSs in order to provide differentiated functions, and may dynamically delete some of the existing elements, or may add new elements. Accordingly, the middleware 330 may omit some of the elements described in the embodiments of the present disclosure, may further include other elements, or may replace the some of the elements with elements, each of which performing a similar function and having a different name.

The API 360 is a set of API programming functions, and may be provided with a different configuration according to an OS. In the case of Android or iOS, for example, one API set may be provided to each platform. In the case of Tizen, two or more API sets may be provided to each platform.

The applications 370 may include a preloaded application and/or a third party application, and may include a home 371, dialer 372, a short message service (SMS)/multimedia messaging service (MMS) 373, instant message (IM) 374, browser 375, camera 376, alarm 377, contact 378, voice dial 379, electronic mail (e-mail) 380, calendar 381, media player 382, album 383, and clock application 384, and any other suitable and/or similar application.

At least a part of the programming module 310 may be implemented by instructions stored in a non-transitory computer-readable storage medium. When the instructions are executed by one or more processors, the one or more processors may perform functions corresponding to the instructions. The non-transitory computer-readable storage medium may be the memory 220. At least a part of the programming module 310 may be executed by the one or more processors 210, and may include a module, a program, a routine, a set of instructions, and/or a process for performing one or more functions.

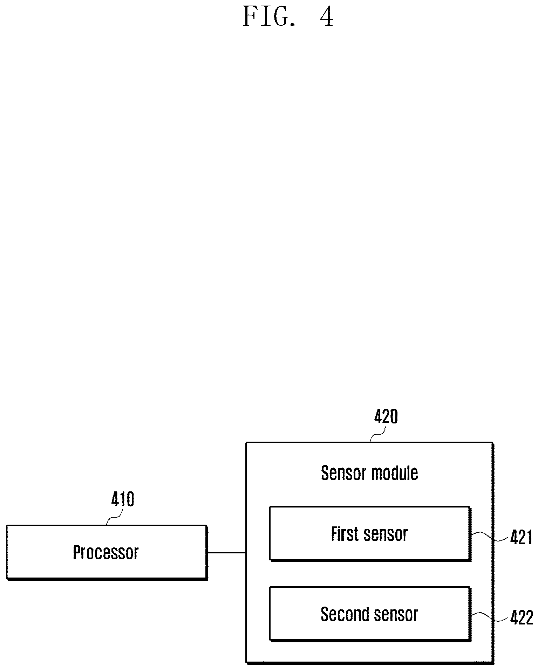

FIG. 4 illustrates an electronic device according to embodiments of the present disclosure.

In FIG. 4, the electronic device may include a processor 410 and a sensor module 420. The sensor module 420 may include a first sensor 421 and a second sensor 422. The electronic device according to embodiments may further include some essential or optional elements other than the elements shown in FIG. 4. For example, the electronic device may be configured to include an input module, such as a touch panel, a hard key, a proximity sensor, or a biometric sensor, or a power supply unit.

According to embodiments, the processor 410 may perform various functions, based on inputs received through the sensor module 420.

According to embodiments, the processor 410 may activate the first sensor 421 and activate the second sensor 422 in response to a first input received through the first sensor 421, such as an input received for a first time or an input received at a predefined area of the electronic device.

The processor 410 may perform a predefined function in response to a second input received through the second sensor 422, such as a touch input, such as a long touch, received continuously for a given time or a touch input, such as a double tap, received repeatedly at regular intervals.

The first sensor 421 may include a touch sensor, and may transmit the first input to the processor 410. Based on the first input transmitted from the first sensor 421, the processor 410 may calculate a touch time (i.e., a time when a touch occurs), and a touch location (i.e., a location where a touch occurs). The first sensor 421 may be disposed near the second sensor 422, such as disposed to surround(or circumscribe) the second sensor 422 or disposed substantially proximate to one of sides of the second sensor 422.

According to an embodiment, the first sensor 421 may be mounted on the touch panel and disposed to overlap with the display forming a touch screen of the electronic device. The first sensor 421 may correspond to the touch panel.

The second sensor 422 may include a finger scan sensor and may transmit the second input to the processor 410. Based on the second input transmitted from the second sensor 422, the processor 410 may measure such information as the touch time and the result of fingerprint recognition. The second sensor 422 may be implemented in a separate physical key or button, such as a home key. For example, the second sensor 422 may be mounted on the touch panel and disposed to overlap with the display forming a touch screen of the electronic device.

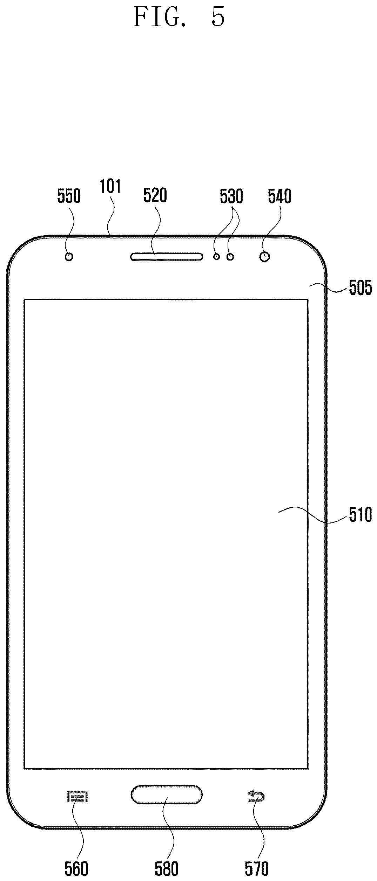

FIG. 5 illustrates the front face of an electronic device according to embodiments of the present disclosure.

Referring to FIG. 5, the electronic device 101 may be one of various types such as a mobile phone, a smart phone, a notebook computer, a tablet device, or a wearable device.

A display 510 may be located on the front face 505 of the electronic device 101 and may be overlapped with, thus forming a touch screen, a touch panel on which the first sensor 421 is mounted. A speaker 520 for outputting a voice signal may be installed at an upper portion of the electronic device 101 above the display 510. A hard key, such as a home key 580, and soft keys 560 and 570 may be disposed at a lower portion of the electronic device 101 below the display 510.

According to an embodiment, the electronic device 101 may have some components for performing various functions and mounted around the speaker 520.

According to embodiments, these components may include at least one sensor module 530, such as an illuminance sensor, such as a light sensor, a proximity sensor, an infrared sensor, and an ultrasonic sensor. These components may include a camera 540 and an LED indicator 550 for indicating status information of the electronic device 101.

According to an embodiment, in the electronic device 101, the second sensor may be disposed at a location corresponding to the home key 580, and the first sensor may be disposed at a location corresponding to the soft keys 560 and 570. The electronic device 101 may detect a user's fingerprint through the home key 580 and also detect a touch input through the soft keys 560 and 570. Specifically, the electronic device 101 may receive a user's input through the home key 580 and the soft keys 560 and 570 and then provide a corresponding particular function.

According to an embodiment, the first sensor 421 and the second sensor 422 may be disposed at any other location such as at the rear face or lateral face of the electronic device 101.

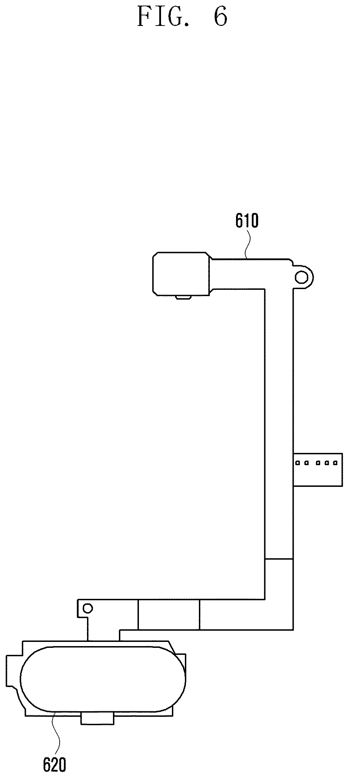

FIG. 6 illustrates the structure of a finger scan sensor of an electronic device according to embodiments of the present disclosure.

FIG. 6 illustrates the structure of a flexible circuit board 610 to which a finger scan sensor 620 is connected. As discussed above, the finger scan sensor 620 may correspond to the second sensor. The flexible circuit board 610 may have a finger scan sensor controller mounted thereon to control the finger scan sensor 620. The finger scan sensor controller may receive a signal from the finger scan sensor 620 and then transmit the signal to the processor of the electronic device. In addition, the finger scan sensor controller may control activation or deactivation of the finger scan sensor 620. However, this is an example, and the processor 410 of the electronic device 101 may directly control the finger scan sensor 620.

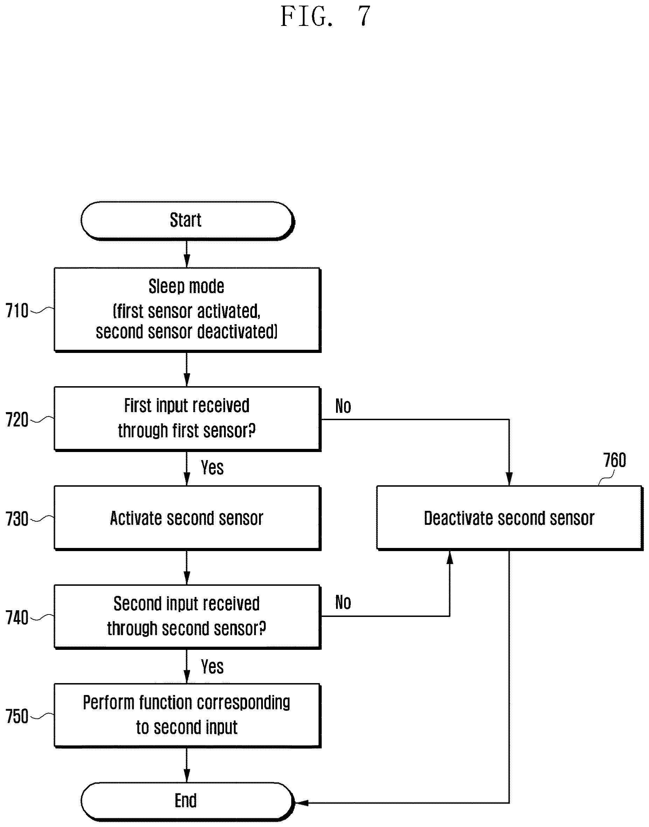

FIG. 7 illustrates a method for performing a function through first and second sensors at an electronic device according to embodiments of the present disclosure.

In FIG. 7, the electronic device 101 may enter a sleep mode at step 710. For example, in the sleep mode, the display may be inactivated, whereas the touch panel overlapped with the display may be activated. Therefore, in the sleep mode, the electronic device 101 may recognize a user's touch input. According to embodiments, the first sensor 421 of the electronic device 101 may be activated in the sleep mode. In addition, the electronic device 101 may receive a message from an external electronic device in the sleep mode.

At step 720, the electronic device 101 may determine whether the first input is received through the first sensor 421. The first input may include an input signal received for the first time or an input signal received at a predefined area of the electronic device 101. For example, the first sensor 421 may be a touch scan sensor, and the input signal may be a touch signal. The electronic device 101 may recognize, as the first input, a touch signal entered for the first time or a touch signal detected from the predefined area thereof.

At step 730, when the first input is received, the electronic device 101 may activate the second sensor 422. At step 760, if the first input is not received, the electronic device 101 may maintain a deactivated state of the second sensor 422.

The second sensor 422 may be a finger scan sensor. Typically, the electronic device 101 may activate the second sensor 422 even in the sleep mode. However, if the second sensor 422 is continuously activated in the sleep mode, the electronic device 101 has to consume electric current of about 25mA. Therefore, according to an embodiment, the second sensor 422 is activated only in response to the first input, and the electronic device 101 may reduce power consumption.

At step 740, the electronic device 101 may determine whether the second input is received through the second sensor 422. The second input may include an input of a touch signal received continuously for a given time or an input of a touch signal received repeatedly at regular intervals.

At step 750, when the second input is received, the electronic device 101 may perform a particular function corresponding to the second input. The electronic device 101 may perform a voice recognition function or a camera capture function. Such a function corresponding to the second input may be set by the manufacturer of the electronic device 101 or the user.

The second input may be classified into different inputs, depending on different user actions. For example, if a touch input is received continuously through the second sensor 422 for a given time, the electronic device 101 may perform the voice recognition function. If a touch input is received repeatedly through the second sensor 422 at regular intervals, the electronic device 101 may perform the camera capture function. According to another embodiment, the electronic device 101 may detect a click action using the second sensor 422. If a click input is received through the second sensor 422, the electronic device 101 may perform other particular operations. The aforesaid touch inputs may be distinguished from this click input.

At step 760, if the second input is not received for a given time, the electronic device 101 may deactivate the second sensor 422. Specifically, if it is determined at step 740 that no second input is received even though the second sensor 422 is activated at step 730, the electronic device 101 may determine that the user has no intention of using the second sensor 422, and thereby terminate the operation of the second sensor 422. As previously noted, when no first input received at step 720 as discussed above, the electronic device 101 may maintain the deactivated state of the second sensor 422. Therefore, the electronic device 101 may minimize power consumption caused by the second sensor 422.

According to an embodiment, the function corresponding to the second input in the above-described flow may be performed regardless of whether a security application of the electronic device 101 is released. That is, without releasing the security application, the user may use the function corresponding to the second input. Also, the electronic device 101 may provide the user with frequently used and favorite functions in a simplified and intuitive manner.

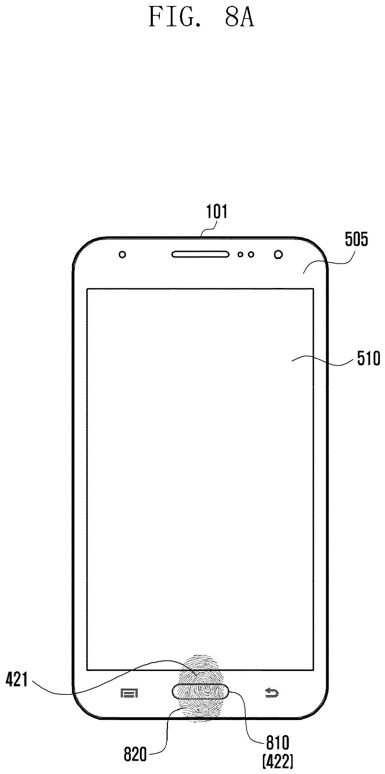

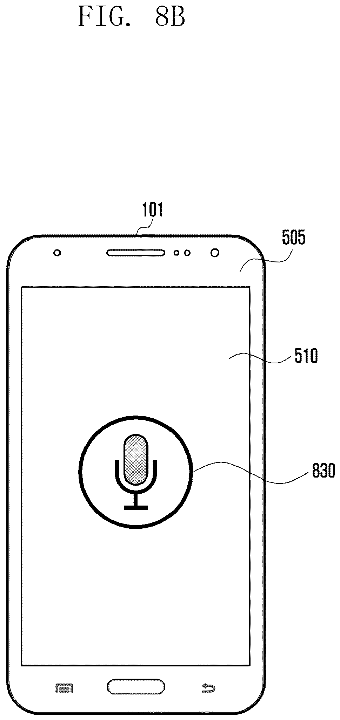

FIGs. 8A and 8B illustrate a method for performing a function through first and second sensors at an electronic device according to embodiments of the present disclosure.

Referring to FIG. 8A, the electronic device 101 may be placed in a sleep mode, in which the display 510 disposed on the front face 505 of the electronic device 101 may display nothing. According to an embodiment, a home key 810 may be disposed at a lower portion of the electronic device 101 below the display 510. The second sensor 422 may be disposed at a location corresponding to the home key 810, i.e., may be disposed at the home key 810 such that the second sensor 422 is integrally formed with the home key 810. The first sensor 421 may be disposed between the home key 810 and the display 510. This is, however, an example, and the first sensor 421 may be disposed to surround the home key 810, or may be mounted on a touch panel overlapped with the display 510.

According to another embodiment, the first sensor 421 may be a touch panel. As described above, if the first sensor 421 is disposed near the second sensor 422 such as disposed to surround(or circumscribe) the second sensor 422 or disposed substantially proximate to one of sides of the second sensor 422, the probability that the user touches the first sensor 421 while touching the second sensor 422 may be increased. Thus, the electronic device 101 may more accurately reflect a user's intention of desiring to use the second sensor 422. As a result, the electronic device 101 may enhance the effect of preventing power consumption.

According to another embodiment, the first sensor 421 and the second sensor 422 may be disposed on the rear face or the lateral face of the electronic device 101. However, the following description is based on the assumption that the first sensor 421 is disposed between the second sensor 422 and the display 510 and that the second sensor 422 is disposed at a location corresponding to the home key 810.

When the electronic device 101 is in the sleep mode, the user may touch the home key 810 of the electronic device 101. Since the second sensor 422 corresponding to the home key 810 is in the deactivated state, the second sensor 422 may fail to recognize the user's touch. When the user touches the home key 810, a user's touch area 820 may reach a peripheral area around the home key 810, such as the user's touch being entered to the first sensor 421 disposed between the display 510 and the home key 810. Since the first sensor 421 is in the activated state even in the sleep mode, the electronic device 101 may receive this touch signal entered through the first sensor 421.

As discussed above, the first input may be a touch input received for the first time or received at the predefined area.

According to an embodiment, even if a touch input is received for the first time, the electronic device 101 may fail to recognize this touch input as the first input unless this touch input is detected at the predefined area. For example, if the first sensor 421 is a touch panel overlapped with the display 510, the user may touch the upper portion of the display 510 for the first time rather than a peripheral area of the second sensor 422. This occurrence may be irrelevant to a user's intention of activating the second sensor 422, and thus the electronic device 101 may not determine this situation as the first input.

Therefore, if the first sensor 421 is a touch panel overlapped with the display 510, the electronic device 101 may regard, as the first input, a touch input received near the second sensor 422 for the first time and then activate the second sensor 422, and may regard, as the first input, a touch input recognized for the first time by the first sensor 421 located around the second sensor 422.

If the user's touch 820 continues, the electronic device 101 may receive the second input, described above in FIG. 7, through the second sensor 422.

Referring to FIG. 8B, the electronic device 101 may perform a particular function corresponding to a user's second input. For example, the electronic device 101 may display a voice recognition user interface 830 indicating that the voice recognition function is being performed. In this state, the electronic device 101 may recognize a user's voice and then perform a corresponding function.

The second input may have several types. It will be described hereinafter that different functions are performed depending on different types of the second input.

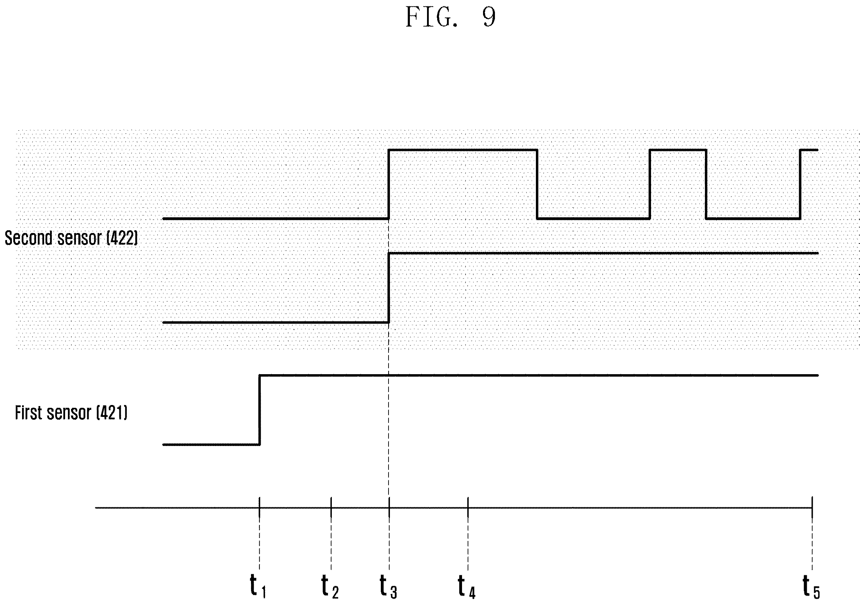

FIG. 9 is a timing diagram illustrating different second inputs entered through a second sensor at an electronic device according to embodiments of the present disclosure.

Referring to FIG. 9, at time T1, the electronic device 101 may recognize through the first sensor 421 that a user's touch begins. At time T2, the electronic device 101 may determine whether the user's touch continues through the first sensor 421. The above-mentioned first time for the first input may correspond to a time span from T1 to T2.

At time T2, the electronic device 101 may identify the location of the touch input. If a touch signal occurs at a predefined area, such as around the second sensor 422, the electronic device 101 may activate the second sensor 422 at time T3. According to an embodiment, if the touch signal occurs near the second sensor 422 before the first time elapses, the electronic device 101 may activate the second sensor 422. At time T3, the electronic device 101 may receive a touch input through the second sensor 422. At time T4, the electronic device 101 may determine whether this touch input continues through the second sensor 422. If this touch input received through the second sensor 422 does not continue until time T4, the electronic device 101 may deactivate the second sensor 422.

At time T5, the electronic device 101 may identify the type of the touch input received through the second sensor 422. For example, the electronic device 101 may determine whether a touch input signal is received continuously or repeatedly at regular intervals through the second sensor 422.

If the touch input signal is repeatedly received at regular intervals through the second sensor 422, the electronic device 101 may perform the second function. If the touch input signal is continuously received through the second sensor 422, the electronic device 101 may perform the first function. The first or second function may be one of various functions, such as voice recognition, camera activation, or contact display, of the electronic device 101. According to an embodiment, the first and second functions may be set by the manufacturer of the electronic device 101 or by the user.

According to another embodiment, the electronic device 101 may detect a click action using the second sensor 422. When the click input is received through the second sensor 422, the electronic device 101 may perform any other predefined function. The above-discussed touch inputs may be distinguished from the click input.

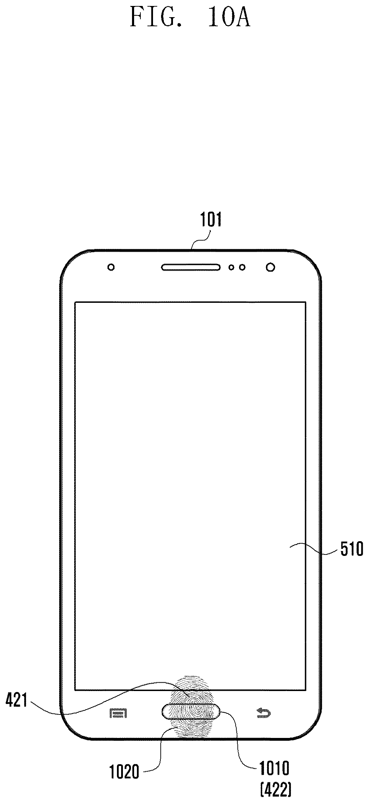

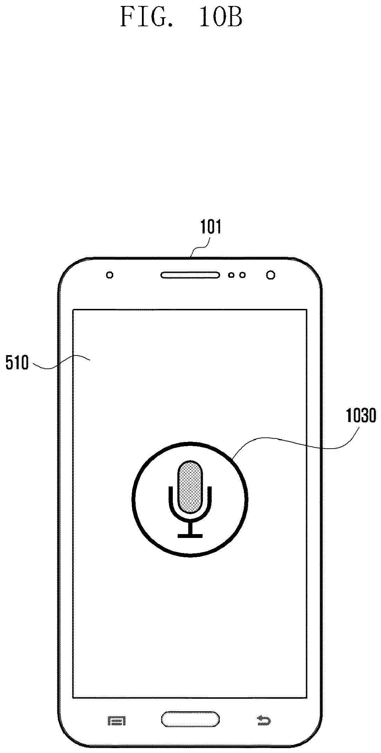

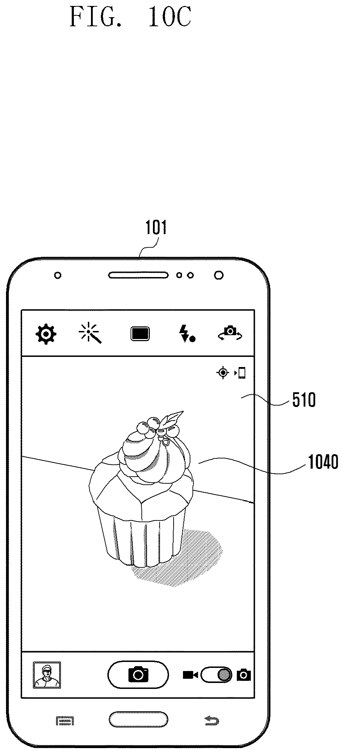

FIGS. 10A, 10B and 10C illustrate performing different functions in response to second inputs entered through a second sensor at an electronic device according to embodiments of the present disclosure.

FIG. 10A illustrates the same situation as described in FIG. 8A. According to an embodiment, the electronic device 101 may be in the sleep mode. A home key 1010 may be disposed below the display 510. The second sensor 422 may be disposed at a location corresponding to the home key 1010. The first sensor 421 may be disposed between the home key 1010 and the display 510. However, the location of the first sensor 421 is not limited to the above. The first sensor 421 may be a touch panel overlapped with the display 510 forming a touch screen, or may be disposed to surround the home key 1010.

When the electronic device 101 is in the sleep mode, the user may touch the home key 1010 of the electronic device 101. Since the second sensor 422 corresponding to the home key 1010 is in the deactivated state, the second sensor 422 may fail to recognize a user's touch. When the user touches the home key 1010, the user's touch area 1020 may reach a peripheral area around the home key 1010, and may be entered to the first sensor 421 disposed between the display 510 and the home key 1010. Since the first sensor 421 is in the activated state even in the sleep mode, the electronic device 101 may receive this touch signal entered through the first sensor 421.

The electronic device 101 may determine whether the first input is received through the first sensor 421. As discussed above, the first input may be a touch input received for the first time or received at the predefined area. When the reception of the first input is identified, the electronic device 101 may activate the second sensor 422. If the user's touch continues, the electronic device 101 may receive the second input, described above in FIG. 7, through the second sensor 422.

The second input may have several types as discussed in FIG. 9. FIGS. 10B and 10C illustrate that the electronic device 101 performs different functions, such as first and second functions, in response to different second inputs.

For example, FIG. 10B corresponds to when the touch input signal is continuously received through the second sensor 422. In this case, the electronic device 101 may perform the voice recognition function and display a user interface 1030 associated with the voice recognition on the display 510.

In another example, FIG. 10C corresponds to when the touch input signal is repeatedly received at regular intervals through the second sensor 422. In this case, the electronic device 101 may trigger the camera function and display a real-time image 1040 entered through the camera on the display 510. For example, a cupcake is the real-time image 1040 displayed in FIG. 10C.

According to an embodiment, the first or second function may be one of various functions of the electronic device 101, such as voice recognition, camera activation, and contact display, and may be set by the manufacturer of the electronic device 101 and by the user.

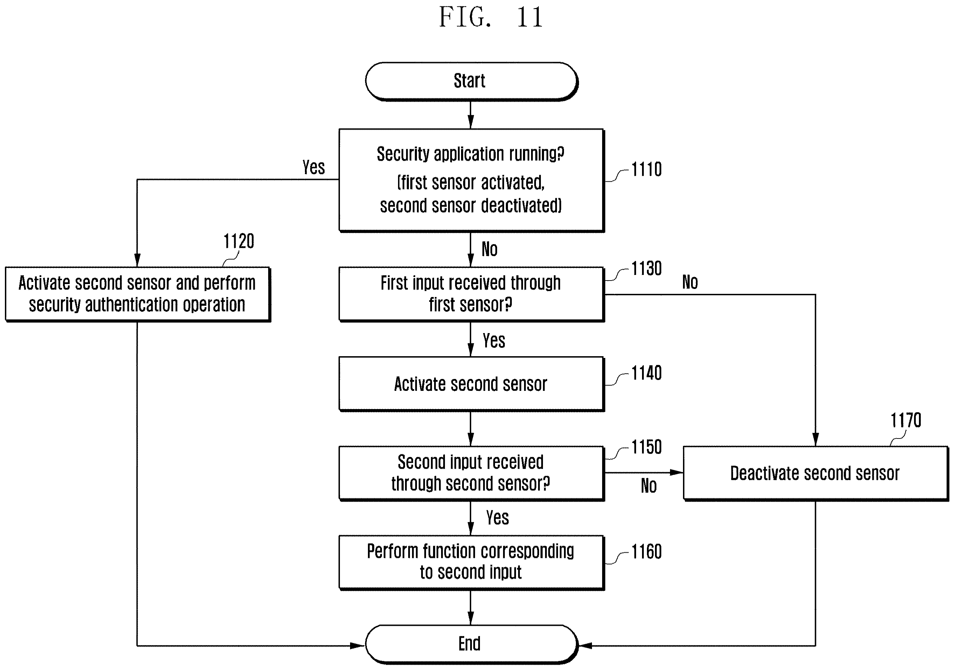

FIG. 11 illustrates a method for performing a function through first and second sensors, when a security application is running, at an electronic device according to embodiments of the present disclosure.

When a security application associated with fingerprint recognition is running, the electronic device 101 may preferentially perform an operation related to a finger scan application rather than performing functions using the first and second sensors 421 and 422.

At step 1110, the electronic device 101 may determine whether the security application is running. The security application is a particular application associated with security information and may include a password entry application, a finger scan application, or an electronic payment application, for example.

At step 1120, if a finger scan security application is running, the electronic device 101 may activate the second sensor 422 and perform a security authentication operation. If a scanned fingerprint is identical with fingerprint information stored in the electronic device 101, the electronic device 101 may be unlocked and operate normally. If the scanned fingerprint is not identical with the stored fingerprint information, the electronic device 101 may maintain a locked state.

If the finger scan security application is not running, the electronic device 101 may perform a certain operation as discussed above in FIG. 7.

At step 1130, if the finger scan security application is not running, the electronic device 101 may determine whether the first input is received through the first sensor 421. The first input may include an input signal received for the first time or received at the predefined area.

At step 1140, when the first input is received, the electronic device 101 may activate the second sensor 422. At step 1170, if the first input is not received, the electronic device 101 may maintain the deactivated state of the second sensor 422.

At step 1150, the electronic device 101 may determine whether the second input is received through the second sensor 422. The second input may include an input of a touch signal received continuously for a given time or received repeatedly at regular intervals.

At step 1160, when the second input is received, the electronic device 101 may perform a particular function corresponding to the second input. At step 1170, if the first input is not received at step 1130, the electronic device 101 may maintain the deactivated state of the second sensor 422. If the second input is not received at step 1150, the electronic device 101 may change the second sensor 422 to the deactivated state.

As discussed herein, the electronic device 101 according to an embodiment may perform different functions, based on whether the security application is running.

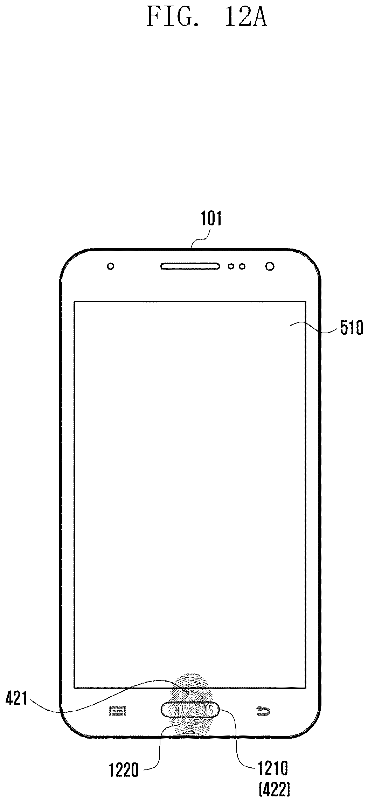

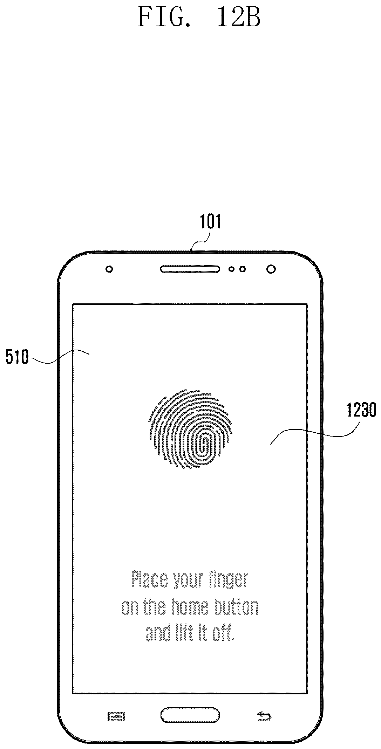

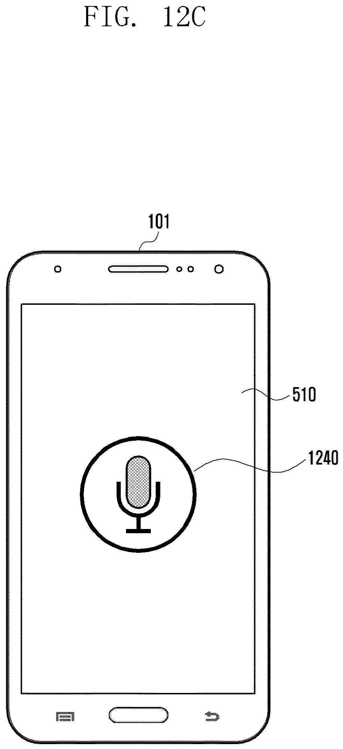

FIGS. 12A, 12B and 12C illustrate a method for performing different functions when a security application is running at an electronic device according to embodiments of the present disclosure.

Referring to FIG. 12A, the electronic device 101 may be in the sleep mode or in the activated state. A home key 1210 may be disposed below the display 510. The second sensor 422 may be disposed at a location corresponding to the home key 1210. The first sensor 421 may be disposed between the home key 1210 and the display 510. Alternatively, the first sensor 421 may be a touch panel overlapped with the display 510 forming a touch screen, or may be disposed to surround the home key 1210.

The user may touch the home key 1210 of the electronic device 101. Since the second sensor 422 corresponding to the home key 1210 is in the deactivated state, the second sensor 422 may fail to recognize a user's touch. When the user touches the home key 1210, the user's touch area 1220 may reach a peripheral area around the home key 1210, and may be entered to the first sensor 421 disposed between the display 510 and the home key 1210. In this case, the electronic device 101 may perform different functions depending on states of the electronic device 101.

For example, FIG. 12B illustrates that the security application is running while the electronic device 101 is activated. The electronic device 101 may display a user interface 1230 for fingerprint authentication on the display 510, and the user may proceed to the fingerprint authentication in accordance with the guidance. FIG. 12C illustrates that the electronic device 101 that detects the first input through the first sensor 421 and activates the second sensor 422 in the sleep mode performs a predefined function corresponding to the second input. For example, the electronic device 101 may execute a voice recognition application and display a voice recognition guidance user interface 1240 on the display 510.

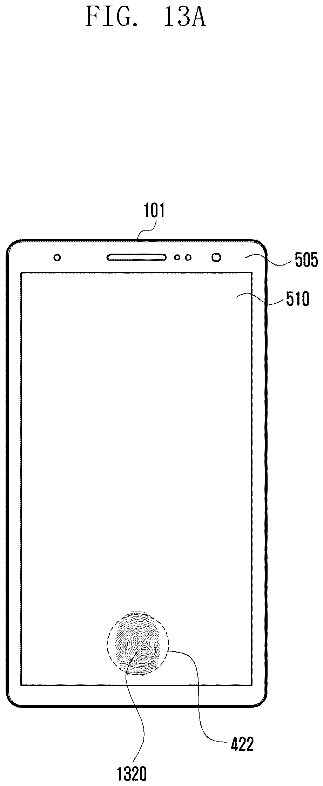

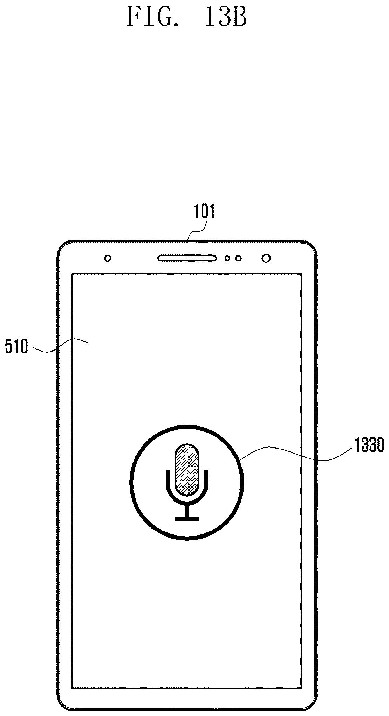

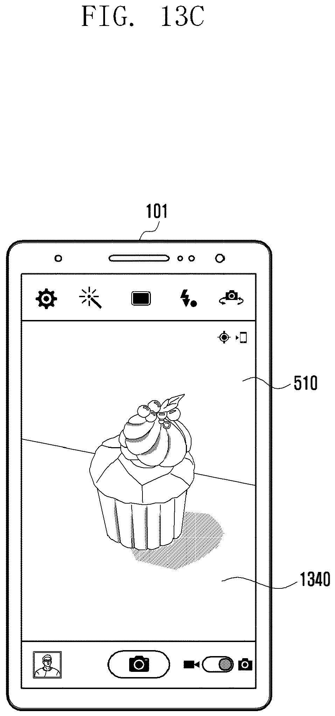

FIGS. 13A, 13B and 13C illustrate performing predefined functions through first and second sensors when there is no physical key on the front face of an electronic device according to embodiments of the present disclosure.

The electronic device 101 according to an embodiment may dispose the display 510 on the front face 505, and may include no hard key below the display 510. The display 510 may be overlapped with a touch panel, thus forming a touch screen. In this case, the touch panel may correspond to the first sensor 421. The second sensor 422 for fingerprint recognition may be mounted on the touch panel at a location below the display 510.

When the electronic device 101 is in the sleep mode, the user may touch a lower portion of the display 510. Since the second sensor 422 located at the lower portion of the display 510 is in the deactivated state, the second sensor 422 may fail to recognize a user's touch. When the user touches the lower portion of the display 510, the user's touch area 1320 may reach a peripheral area around the second sensor 422 and may be entered to the touch panel. Since the touch panel is in the activated state even in the sleep mode, the electronic device 101 may receive this touch signal entered through the touch panel.

The electronic device 101 may determine whether the first input is received through the touch panel. As discussed above, the first input may be a touch input received for the first time or received at the predefined area. If the first input is received, the electronic device 101 may activate the second sensor 422. If the user's touch 1320 continues, the electronic device 101 may receive the second input, described above in FIG. 13A, through the second sensor 422.

The second input may have several types. FIGs. 13B and 13C illustrate that the electronic device 101 performs different functions in response to different second inputs.

For example, FIG. 13B illustrates that a function is performed when the touch input signal is received continuously through the second sensor 422. In this case, the electronic device 101 may perform the voice recognition function and display a voice recognition user interface 1330 on the display 510.

FIG. 13C illustrates that a function is performed when the touch input signal is received repeatedly at regular intervals through the second sensor 422. The electronic device 101 may trigger the camera function and display a real-time image 1340 entered through the camera on the display 510. For example, a cupcake is the real-time image 1340 displayed in FIG. 13C.

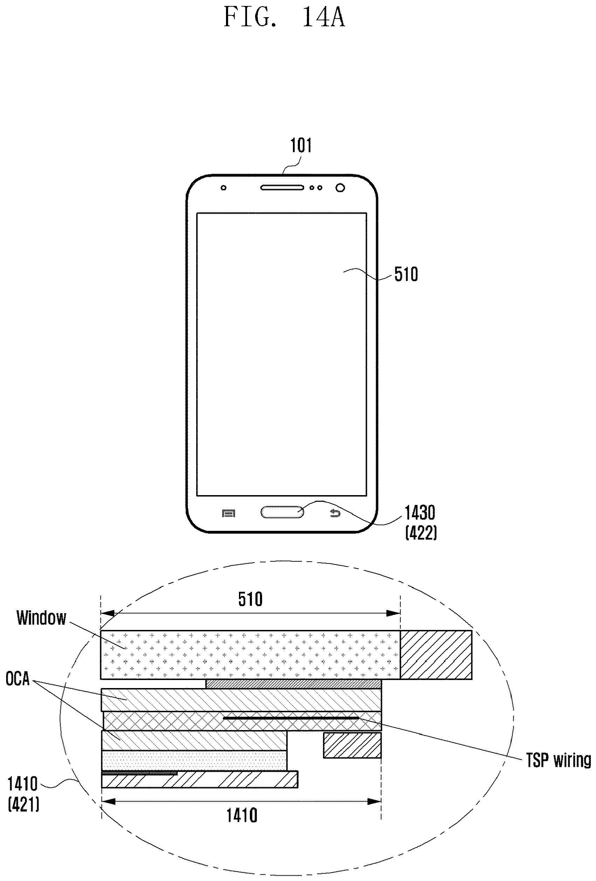

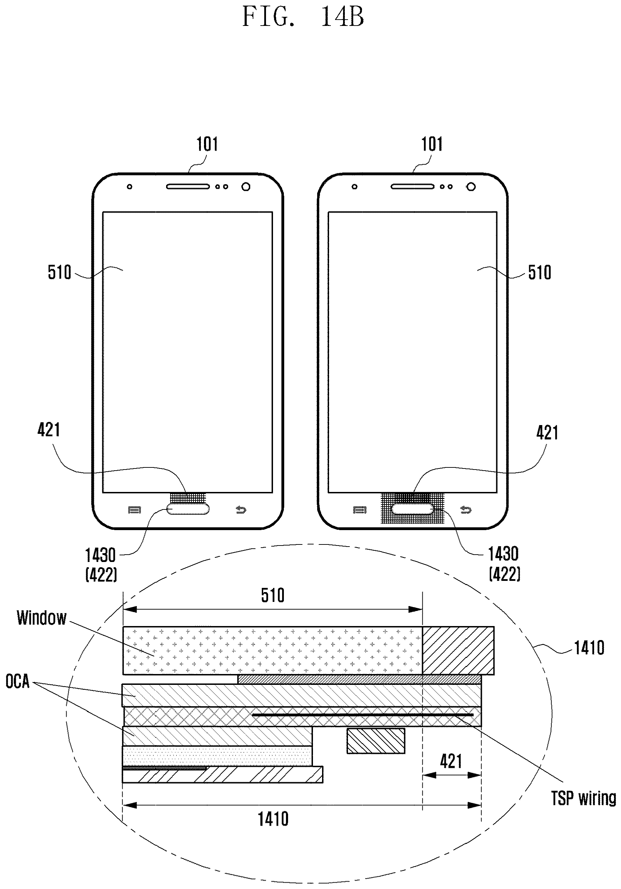

FIGS. 14A and 14B illustrate the state when a first sensor is disposed near a physical key of an electronic device according to embodiments of the present disclosure.

FIG. 14A illustrates the touch panel 1410 which is of a smaller size than the display 510. In this case, a touch screen panel (TSP) wiring layer and optical clear adhesive (OCA) layers may be overlapped with and disposed within the area of a window.

In this case, the first sensor 421 may correspond to the touch panel 1410. The second sensor 422 may be disposed at a location corresponding to a home key 1430. When the user touches the home key 1430, the user's touch area may reach the lower portion of the display 510. Therefore, the electronic device 101 may activate the second sensor 422 in response to the first input received through the touch panel 1410 and then perform a predefined function in response to the second input received through the second sensor 422.

FIG. 14B illustrates the touch panel 1410 which is of a larger size than the display 510. In this case, the TSP wiring layer and the OCA layers may be overlapped with and exceed the area of the window.

In this case, the first sensor 421 may be a certain portion of the touch panel 1410 that is not overlapped with the window. The second sensor 422 may be disposed at a location corresponding to the home key 1430. When the user touches the home key 1430, a user's touch area may reach the first sensor 421 around the home key 1430. Therefore, the electronic device 101 may activate the second sensor 422 in response the first input received through the first sensor 421 and then perform a predefined function in response to the second input received through the second sensor 422.

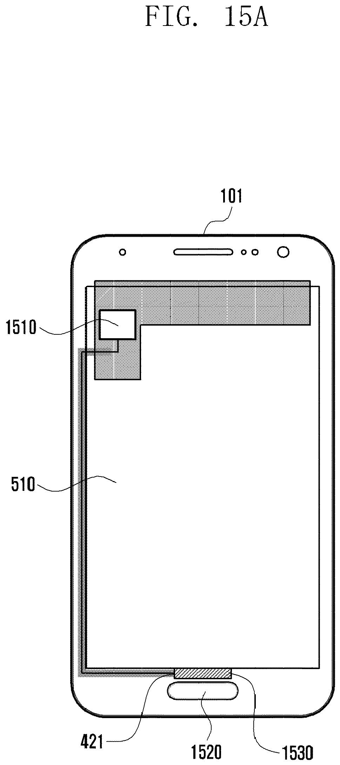

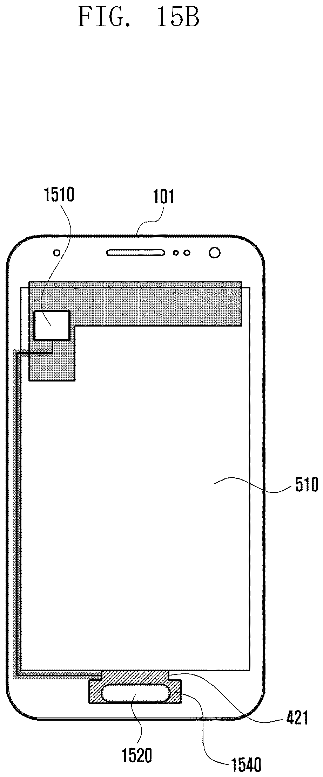

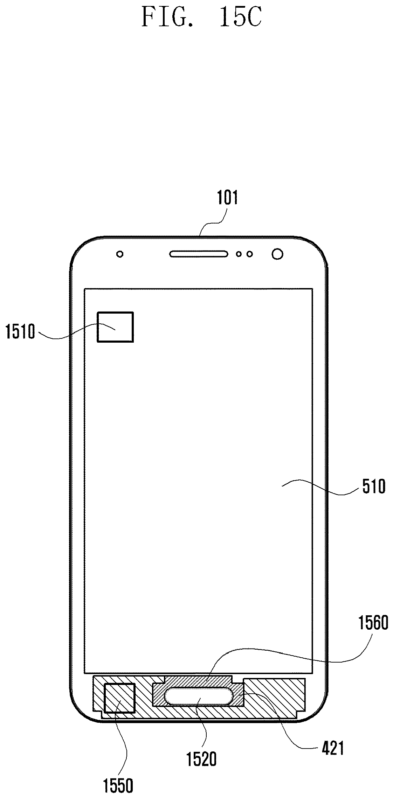

FIGs. 15A, 15B and 15C illustrate the state when a touch panel for a first sensor is separately disposed around a physical key of an electronic device according to embodiments of the present disclosure.

Referring to FIG. 15A, the electronic device 101 may dispose a TSP 1530 for the first sensor 421 between the home key 1520 and the display 510. The electronic device 101 may separately have a touch screen panel integrated circuit (TSP IC) for controlling the TSP 1530 for the first sensor 421. Alternatively, the electronic device 101 may utilize a TSP IC 1510 for a touch panel of the display 510 so as to control the TSP 1530 for the first sensor 421. For this, the electronic device 101 may electrically connect the TSP IC 1510 to the TSP 1530 for the first sensor 421.

Referring to FIG. 15B, the electronic device 101 may dispose a TSP 1540 for the first sensor 421 in a manner surrounding the home key 1520. The TSP IC for controlling the TSP 1540 for the first sensor 421 may be disposed in the same manner as in FIG. 15A.

Referring to FIG. 15C, the electronic device 101 may dispose a TSP 1560 for the first sensor 421 in a manner surrounding the home key 1520. A TSP IC 1550 for controlling the soft key of the electronic device 101 may be utilized as a TSP IC for controlling the TSP 1560 for the first sensor 421.

According to an aspect of the present disclosure, an electronic device includes a sensor module including a first sensor configured to recognize a touch of a user and a second sensor configured to recognize a fingerprint of the user; and a processor electrically connected to the sensor module, wherein the processor is configured to activate the first sensor, activate the second sensor in response to a first input received through the first sensor, and perform a function corresponding to a second input in response to the second input being received through the second sensor.

In the electronic device, the first sensor may be disposed near the second sensor.

The electronic device may further include a touch screen, wherein the first sensor is at least part of the touch screen.

In the electronic device, the second sensor may be mounted on the touch screen.

In the electronic device, the first input may be at least one of an input of a touch signal received through the first sensor for a first time, or an input of a touch signal received at a predefined area through the first sensor.

In the electronic device, the second input is at least one of an input of a touch signal received continuously through the second sensor for a given time, or an input of a touch signal received repeatedly through the second sensor at regular intervals.

In the electronic device, the processor may be further configured to: perform a first function in response to the input received continuously for the given time, and perform a second function in response to the input received repeatedly at the regular times.

In the electronic device, if a security application is running when the first input is received, the processor may be further configured to activate the second sensor, and if the security application is not running when the first input is received, the processor may be further configured to activate the second sensor in response to the first input and to perform a predefined function in response to the second input received through the second sensor.

The electronic device may further include an application processor for executing an application, and another sensor module, wherein the processor includes a low-power (i.e., less power consumption) processor for controlling the sensor module and the another sensor module.

According to another aspect of the present disclosure, a method for controlling an electronic device including a first sensor for recognizing a touch of a user and a second sensor for recognizing a fingerprint of the user, includes activating the first sensor, activating the second sensor in response to a first input received through the first sensor, and performing a function corresponding to a second input in response to the second input being received through the second sensor.

In the method, the first sensor may be disposed near the second sensor.

In the method, the electronic device may further include a touch screen, and wherein the first sensor is at least part of the touch screen.

In the method, the second sensor may be mounted on the touch screen.

In the method, the first input may be at least one of an input of a touch signal received through the first sensor for a first time, or an input of a touch signal received at a predefined area through the first sensor.

In the method, the second input may be at least one of an input of a touch signal received continuously through the second sensor for a given time, or an input of a touch signal received repeatedly through the second sensor at regular intervals.

In the method, the operation of performing the particular function may include performing a first function in response to the input received continuously for the given time, and performing a second function in response to the input received repeatedly at the regular times.

In the method, if a security application is running when the first input is received, the method may further include operation of activating the second sensor, and wherein if the security application is not running when the first input is received, the method may further include operations of activating the second sensor in response to the first input and performing a predefined function in response to the second input received through the second sensor.

The term "module" used in the present disclosure may refer to a unit including one or more combinations of hardware, software, and firmware. The "module" may be interchangeable with a term, such as "unit," "logic," "logical block," "component," or "circuit". The "module" may be a minimum unit of a component formed as one body or a part thereof, may be a minimum unit for performing one or more functions or a part thereof, and may be implemented mechanically or electronically. For example, the "module" according to an embodiment of the present disclosure may include at least one of an application-specific integrated circuit (ASIC) chip, a field-programmable gate array (FPGA), and a programmable-logic device for performing certain operations which have been known or are to be developed in the future.

Examples of computer-readable media include: magnetic media, such as hard disks, floppy disks, and magnetic tape; optical media such as compact disc read only memory (CD-ROM) disks and digital versatile disc (DVD), magneto-optical media, such as floptical disks, and hardware devices that are specially configured to store and perform program instructions, such as ROM, RAM, and flash memory. Examples of program instructions include machine code instructions created by assembly languages, such as a compiler, and code instructions created by a high-level programming language executable in computers using an interpreter. The described hardware devices may be configured to act as one or more software modules in order to perform the operations and methods described above, or vice versa.

Embodiments of the present disclosure can measure an angle between displays by installing at least one sensor in a housing including a plurality of screens. Further functions can be provided for a user by utilizing the measured angle.

Modules or programming modules according to the embodiments of the present disclosure may include one or more components, remove part of the components described above, or include new components. The operations performed by modules, programming modules, or the other components, according to the present disclosure, may be executed in serial, parallel, repetitive or heuristic fashion. Part of the operations can be executed in any other order, omitted, or executed with additional operations.

Although embodiments of the invention have been described in detail above, it should be understood that many variations and modifications of the basic inventive concept herein described, which may be apparent to those skilled in the art, will still fall within the spirit and scope of the embodiments of the invention as defined in the appended claims.

## Claims

1. An electronic device comprising:
a sensor module including a first sensor configured to recognize a touch of a user and a second sensor configured to recognize a fingerprint of the user; and
a processor electrically connected to the sensor module,
wherein the processor is configured to:
activate the first sensor,
activate the second sensor in response to a first input received through the first sensor, and
perform a function corresponding to a second input in response to the second input being received through the second sensor.

2. The electronic device of claim 1, wherein the first sensor is disposed substantially proximate to at least one of sides of the second sensor.

3. The electronic device of claim 1, further comprising:
a touch screen,
wherein the first sensor is integrally formed in at least part of the touch screen,
wherein the second sensor is mounted on the touch screen.

4. The electronic device of claim 1, wherein the first input is at least one of:
a touch signal received through the first sensor for a first time, and
a touch signal received at a predefined area through the first sensor.

5. The electronic device of claim 1, wherein the second input is at least one of:
a touch signal received continuously through the second sensor for a given time, and
a touch signal received repeatedly through the second sensor at regular intervals.

6. The electronic device of claim 5, wherein the processor is further configured to:
perform a first function in response to the input received continuously for the given time, and
perform a second function in response to the input received repeatedly at the regular intervals.

7. The electronic device of claim 1, wherein, if a security application is running when the first input is received, the processor is further configured to activate the second sensor, and
wherein, if the security application is not running when the first input is received, the processor is further configured to activate the second sensor in response to the first input and to perform a predefined function in response to the second input being received through the second sensor.

8. The electronic device of claim 1, further comprising:
an application processor for executing an application, and another sensor module,
wherein the processor includes a low-power processor for controlling the sensor module and the another sensor module.

9. A method for controlling an electronic device including a first sensor for recognizing a touch of a user and a second sensor for recognizing a fingerprint of the user, the method comprising:
activating the first sensor;
activating the second sensor in response to a first input received through the first sensor; and
performing a function corresponding to a second input in response to the second input being received through the second sensor.

10. The method of claim 9, wherein the first sensor is disposed substantially proximate to at least one of sides of the second sensor.

11. The method of claim 9, wherein the electronic device further includes a touch screen, and
wherein the first sensor is integrally formed in at least part of the touch screen, and
wherein the second sensor is mounted on the touch screen.

12. The method of claim 9, wherein the first input is at least one of a touch signal received through the first sensor for a first time, and a touch signal received at a predefined area through the first sensor.

13. The method of claim 9, wherein the second input is at least one of a touch signal received continuously through the second sensor for a given time, and a touch signal received repeatedly through the second sensor at regular intervals.

14. The method of claim 13, wherein performing the particular function includes performing a first function in response to the input received continuously for the given time, and performing a second function in response to the input received repeatedly at the regular intervals.

15. The method of claim 9, wherein, if a security application is running when the first input is received, the method further comprises activating the second sensor, and
Wherein, if the security application is not running when the first input is received, the method further comprises activating the second sensor in response to the first input and performing a predefined function in response to the second input being received through the second sensor.
